# EUROPEAN PATENT APPLICATION

(11) **EP 1 473 959 A1**
(43) Date of publication of application: **03.11.2004**
(21) Application number: 04252429.8
(22) Date of filing: 27.04.2004
(51) Int. Cl.: H04Q 7/38

(54) **Efficient tracking method for location determination of mobile units**

(30) Priority: 29.04.2003 US 425299
(71) Applicant: Openwave Systems Inc., Redwood City, CA 94063 (US)
(72) Inventor: De Verteuil, André Laurent, Toronto Ontario M5M 1J4 (CA)
(74) Representative: Meldrum, David James

(57) **Abstract**

The inventive method allows for efficient use of network resouces utilized for procuring location information in a wireless network. In one implementation, the timing for updating location information utilized to monitor a mobile unit is dynamically set depending, at least in part, on the location of the mobile unit relative to one or more locations of interest. In this regard first time location information for a mobile unit is compared to locations of interest for that mobile unit. Based on this comparison, a timing for updating the location information is determined that will allow for effective monitoring of the mobile unit's status relative to one or more locations of interest while reducing network resource usage. For example, as the distance between a mobile unit and a boundary of a location of interest increases, the frequency of obtaining updated location information may be reduced.

## Description

### FIELD OF THE INVENTION

The present invention relates in general to procuring location information regarding mobile units in a telecommunications network for use in location-based services applications and, in particular, to the efficient use of network resources for tracking mobile units relative to one or more service zones.

### BACKGROUND OF THE INVENTION

A number of different types of location-based applications have been developed or proposed for wireless telecommunications networks, i.e., communications networks involving at least one wireless interface between communicating devices. Generally, such applications determine or otherwise obtain location information regarding the location of a mobile unit under consideration, e.g., a wireless telephone, PDA, wireless data terminal or the like, and utilize such location information to monitor mobile unit movements and/or provide service information based on the mobile unit location. Examples of location-based applications include fleet tracking services and location-based billing applications. In fleet tracking services, the location of mobile resources, which include a wireless communications unit, are periodically determined such that the location of such resources may be monitored. In location-based billing applications, a rate for a call placed or received by a wireless telephone is dependent on the location of the phone, e.g., whether the phone is inside or outside of a "service zone" for the subscriber proximate to the subscriber's residence, business or other defined location. Various other applications have been proposed or implemented.

Location-based tracking applications generally involve comparing a mobile unit location to a location of interest, e.g., a point identified by geographical coordinates, a boundary, or a predefined service zone definition. This comparison may be a binary determination (e.g., that the mobile unit is either inside or outside of a zone under consideration), a matching determination (e.g., that the mobile unit location matches or overlaps one or more stored zone definitions) or a proximity determination (e.g., to identify estimated time of arrival). To effectively make such comparisons, current (or recent) mobile unit location must be determined. That is, at one or more relevant processing steps, mobile unit location information corresponding to a particular time may be compared to one or more service zones or other stored location information. Accordingly, such location-based applications often identify the location of such mobile units on a periodic schedule. For example, in a particular application, the location of a mobile unit may be determined every fifteen minutes to determine the mobile unit's current location. In order to identify the location of a mobile unit, location information must be procured from one or more location information sources within the wireless network.

In some cases today, multiple location information sources are available. For example, within certain areas of existing networks, a network-based Location Determination Technology (LDT), e.g., Position Determination Equipment (PDE) or a Serving Mobile Location Center (SMLC) is available to locate mobile units. Such network-based equipment often utilize a multilateration technology, such as time difference of arrival (TDOA including E-OTD and OTDOA) or angle of arrival (AOA) to locate a unit based on signals transmitted between the mobile unit and multiple equipment sites having known locations. Some mobile units are equipped with Global Positioning System (GPS) receivers that can determine the position of the unit based on signals from satellites of the GPS constellation. In addition, location information may be available from the network itself, e.g., information that is used to route calls, manage cell-to-cell handoff or otherwise operate the network. For example, such information may include a cell, cell sector or other network subdivision identifier ("Cell ID") or handoff information residing in the network for the purposes of handoff management such as Network Measurement Report (NMR) and Mobile Assisted Hand-Off (MAHO) information. Thus, the available sources of location information may include LDT sources such as network-based LDTs and GPS and internal network information such as Cell ID and handoff information. Regardless of which source of location information is utilized, network resources (e.g., processing capacity, bandwidth, and network usage costs) are consumed to determine the location of a mobile unit.

### SUMMARY OF THE INVENTION

The present aspect is directed to more efficiently utilizing network resources for providing location information utilized in location-based applications. As noted, some existing location-based applications perform location polling on a fixed periodic basis. That is, mobile units are periodically "polled" on a fixed basis to determine their location relative to one or more service zones. Accordingly, these systems often unnecessarily locate mobile units, which may not be expected to enter or leave a service zone between two successive location polls. For example, the location of a mobile unit may, at a first polling time, be determined to be far enough away from a boundary of interest such that a second location determination at a second polling time (according to a fixed periodic schedule) would be unnecessary as the mobile unit would not be expected to have reached any boundary of interest or to have changed any relevant status between the location polling times.

Invoking location information sources often involves consumption of significant network resources. Such resources may be system resources, e.g., processing resources, messaging traffic, bandwidth or other finite system resources, or may involve pecuniary resources, e.g., in the event that a location's source system provides a charge for access to location information based on usage. In addition, it will be appreciated that different location information sources may utilize differing amounts of network resources. For example, invoking a multilateration location information system (e.g., AOA, TDOA) may require significant messaging and processing resources while utilizing limited air interface bandwidth resources. By contrast, accessing internal network information may utilize fewer network resources as such information may already reside in the network and be available at a location gateway or at other relevant service platform associated with the wireless network. In any case, obtaining the location of a mobile unit in a wireless network requires processing of data from the network and/or the device in order to determine the location of that unit. As more units are tracked or the frequency of such location data required increases, there is a corresponding increase in the processing capacity and network resource usage required to obtain the location of these units. Accordingly, fixed periodic or "blind" polling often results in unnecessarily invoking location information sources and unnecessary consumption of network resources.

The present aspect is based in part on the recognition that through utilization of certain techniques and algorithms the frequency of mobile unit location determination (i.e., location polling) can be dynamically varied resulting in considerable benefits relating to network resource usage. That is, depending on one or more variables related to a mobile unit for which location-based services are provided, the frequency of when the location of such a device is determined may be varied. In this regard non-periodic or "as needed" location polling may be performed to minimize network resource usage while still providing accurate tracking information for a given location-based application. For example, in a location-based billing application, the frequency of location polling for a mobile unit may depend on the unit's location relative to a service zone as well as the time of day. That is, the frequency of location polling may be increased or decreased depending on the location of the mobile unit and/or the time of day during which expected usage rates and/or travel rates may be expected to vary. For example, the location polling frequency of a mobile unit between the hours of 11:00 p.m. and 5:00 a.m. may be half the frequency utilized during standard business hours. Accordingly, over the course of an entire day, fewer location determinations may be made for this mobile unit resulting in reduced overall use of network resources.

As noted, different location information sources may utilize differing amounts of network resources. That is, the network resource "cost" may vary between different location information sources. The present invention further involves a recognition that, in addition to utilizing non-periodic and/or dynamic polling, it may be desirable to mandate the type of location source utilized to determine location of a mobile unit at the next scheduled location polling. For example, in the case of a binary zone matching application such as location-based billing, a low cost source, such as a network source that provides Cell ID information, may be selected for the next location polling if a subscriber is well outside their home zone. The need to access a higher cost resource can thus be avoided until location information is received that indicates that higher accuracy information will be required for a future polling, e.g., because the subscriber is approaching the boundary of their home zone. Accordingly, the duration until the next location polling may also be decreased.

According to one aspect, a method for use in providing location information for a mobile unit within a wireless network is provided. Initially, first location information is obtained for the mobile unit that is utilized to determine the status of the mobile unit relative to one or more locations of interest. This relative status of the mobile unit, in conjunction with one or more predetermined specifications, is used to determine a timing for obtaining second location information (e.g., updated location information) for the mobile unit. In this regard, a timing may be set to minimize network resource usage by maximizing the duration between successive location determinations (e.g., decreasing location polling frequency) while still providing adequate monitoring of the mobile unit relative to the location(s) of interest. Alternatively, the timing may be set such that the duration between successive location polls may be minimized (i.e. increasing location polling frequency) to provide enhanced mobile unit tracking relative to an identified boundary.

Additional information may also be obtained for use in determining an appropriate timing for obtaining second location information. This additional information may include information defining geographical areas or boundaries associated with identified locations of interest. Furthermore, one or more additional specifications related to the desired quality of monitoring/tracking for a mobile unit may be obtained. That is, a location-based service may specify one or more parameters that may affect the timing for obtaining updated location information. For example, a mobile unit may be identified as a low, medium or high priority wherein high priority mobile units may be monitored more frequently.

These specifications may also be used to select one or more location information sources. For example, these specifications may include information as to the allowable accuracy of the location information obtained for monitoring purposes, the timeliness of the location information, cost of the information, as well as availability of the information within a general geographic area. In this regard, the specifications may be utilized in selecting acceptable location information sources that will be utilized to provide location information for a mobile unit. As will be appreciated, these specifications may be utilized in combination with other variables, such as the direction of travel of the wireless unit relative to a location of interest to select appropriate location information sources as well as determine location timing.

Obtaining location information for the mobile unit, at either the first or second time as well as subsequent times thereafter, may be performed in any manner that provides location information having adequate timeliness or accuracy parameters as may be set forth in predetermined specifications or specified by a location-based service. Location information may be received from sources that may include: network sources, such as cell identifiers included within standard wireless network communications; stored location information sources (e.g., a location platform within the wireless network); and/or by invoking location finding systems that are operable to obtain location information for an identified mobile unit. These location-finding systems may include, without limitation, multilateration systems that use triangulation methods to determine the location of a mobile unit, as well as hand set based location determination technologies such as AGPS, GPS, and/or TDOA.

As noted, setting the timing for determining a second location for the mobile unit depends upon, at least in part, the status of the mobile unit at the first time relative to identified areas of interest. For example, the first location of a mobile unit may be used to determine if the mobile unit is inside or outside of a location of interest, or, zone such as a home-calling zone. If inside the zone, the timing for determining second location information may be set to a predetermined default value. If the mobile unit is outside the zone, the first location information may be utilized to set a second timing that corresponds to the time of an expected status change for the mobile unit. For example, a minimum expected travel time between the first location associated with the mobile unit and a boundary associated with the location of interest may be calculated. As will be appreciated, calculation of an expected travel time (e.g. one hour) allows for setting a second location polling time (e.g. fifty minutes) prior to the expected travel time thereby minimizing network resource usage while providing updated location information for a mobile unit prior to an expected status change.

In order to calculate a time when the status of the mobile unit may be expected to change, an algorithm that accounts for a plurality of known variables may be utilized. That is, a plurality of variables that reflect the movements of the mobile unit may be utilized to set a second location determination time and thereby provide enhanced efficiency within the wireless network. These variables may include, without limitation, any or all of the following: a distance between the first location associated with the mobile unit and a boundary of a location of interest; a velocity of travel associated with the mobile unit; a direction of travel associated with the mobile unit; expected usage periods associated with the mobile unit; use history associated with the mobile unit; geographical information for the area (e.g. road information); and timeliness of information required (i.e. how important is it to as close to possible the exact time that a mobile unit enters of leaves a zone). For example, if a mobile unit is determined to be fifty miles from the nearest boundary of a location of interest, the second location timing may be set for one hour. In contrast, if the mobile unit is located fifty miles away from the boundary and proceeding in a direction of travel away from that boundary at a known velocity (e.g. 65 mph), the second location timing may be increased to, for example, one and a half hours.

The variables utilized in calculating an expected change in status time include variables provided with the first location information (e.g., velocity, direction of travel) as well as assumed or assigned values. For example, expected usage periods associated with the mobile unit may include expected busy periods (e.g., standard working hours) as well as periods of unexpected use such as, for example, the period between midnight and 5:00 a.m. In addition, individual use histories of a mobile unit may also be utilized. For example, the expected usage periods may be varied for individual mobile units depending on their use history. That is, a use history associated with a mobile unit may be utilized to better identify individualized expected usage times and/or determine a minimum expected travel time between a given location and a location of interest. For example, a mobile unit may leave its home zone area every morning during the workweek and not return until evening. In this regard, the algorithm may be set to recognize that the mobile unit is unlikely to return to the home area before the end of standard business hours and thereby increase the location determination frequency utilized with that mobile unit during business hours.

Though the frequency at which the second location information is determined may be maximized in accordance with an expected travel time or, minimized due to a proximity of the mobile unit relative to a boundary of a location of interest, the system may further utilize preset maximum or minimum frequencies. For example, a location-based application may specify a maximum period between successive location determinations for use in monitoring a mobile unit. That is, while the timing between successive location determinations may be varied, the duration between timings will never exceed the specified maximum period. Alternatively, applications placing lower emphasis on mobile unit monitoring may set minimum location polling frequencies.

The method of the present aspect may be implemented within a wireless network at a location gateway that is operable to interface with location-based applications via one or more communications networks. These communications networks may include data communications networks through (e.g. the internet), as well as telecommunications networks (e.g. wireless and/or PSTN). Furthermore, this location gateway may be operable to communicate with various sources of location information within the wireless network, including location-finding equipment sources. However, it will be appreciated that one or more of the steps utilized in the present aspect may be performed at separate nodes within a wireless and/or data network. Alternatively, the method of the subject aspect may be performed by a location-based application, or, by the mobile unit itself. In the latter regard, the mobile unit may include processing and storage capabilities that allow the mobile unit to, as needed, determine and report its location to a location-based application.

According to another aspect, a method is provided for obtaining updated location information for a mobile unit wherein the updated location information is procured in a manner that efficiently utilizes network resources. Initially, first time location information for a mobile unit is received and compared to location(s) of interest for that mobile unit. Using this first time location information, a status of the mobile unit (e.g. in-zone, out of zone, a distance from a boundary of the zone, etc.) may be determined. Based on this status, a second time for requesting updated location information may be set to, for example, maximize the duration between successive location determinations in order make efficient use of network resources. Preferably, the second time will be set such that a change in status of the monitored mobile unit (e.g., a zone boundary crossing) may be identified within a predetermined time of that status change occurring. Accordingly, at the second time, second location information is obtained from a location information source. In this regard, the method requires accessing one or more location information sources at the second time to provide updated location information. As will be appreciated, once the updated location information is obtained, this information may be utilized to set a subsequent time (i.e., a third time) for obtaining additional updated location information.

The updated location information may be obtained from any appropriate location information source. In this regard, the method may entail accessing one or more location information sources over data networks as well as telecommunications networks. Furthermore, the information obtained may include information from location-finding equipment sites, which determine the location of a mobile unit upon request, as well as information from sources of stored location information such as location information gateways within the wireless network. In addition, communication identifiers included within wireless communications (e.g., cell, cell sector information) may also be utilized as a source of location information.

According to another aspect, a method for providing efficient monitoring of a mobile unit that may be implemented with existing location-based service applications is provided. In this regard, the method includes receiving a monitoring request from a location-based service to monitor an identified mobile unit. This request may include, in addition to a mobile unit identifier, one or more monitoring specifications or requirements, as well as information regarding location(s) of interest for use in monitoring the identified mobile unit. Initially, first location information is procured for the identified mobile unit that is compared to the location(s) of interest to determine at least a first relative position therebetween. Based on the relative position of the identified mobile unit to the location(s) of interest, a timing is set for obtaining second location information for the mobile unit. Accordingly, this timing may be set to efficiently utilize the network resources that will be used to obtain the second location information at he second time. In one embodiment of the present aspect, second location information is procured from a location information source at the set timing for use in continued mobile unit monitoring.

Depending on one or more specifications received from the location-based service application, the second location of the identified mobile unit may be reported to the location-based service application when obtained. Alternatively, this information may be provided to the location-based service application only if a relative position between the identified mobile unit and location of interest changes by a predetermined amount. For example, if the identified mobile unit passes through a boundary defined by one of the locations of interest, this change of status may be reported to the location-based service application.

According to another aspect, an apparatus is provided for use in mobile unit monitoring within a wireless network. The apparatus includes a processing platform that is operative to communicate with a plurality of location information sources for obtaining location information for one or more mobile units. The processing platform is in communication with a computer-readable storage medium that stores location of interest information for one or more mobile units. The processing platform also supports logic for accessing location information from the location information sources and for accessing locations of interest from the computer-readable storage medium. Furthermore, this logic is operative to utilize this information to determine a timing for accessing updated location information for an identified mobile unit. As may be appreciated, this processing platform may be located at a node within the wireless network, supported by a location-based application, or, incorporated into a mobile unit for which location-based services are provided. In any case, the platform may be operative to communicate with a plurality of communication information sources over both telecommunication network interfaces as well as data network interfaces.

### BRIEF DESCRIPTION OF THE DRAWINGS

For a more complete understanding of the present invention and further advantages thereof, reference is now made to the following Detailed Description, taken in conjunction with the drawings, in which:
Figure 1 is a schematic diagram of a telecommunications network implementing the present invention;
Figure 2 is a schematic diagram showing a portion of the topology of a wireless network, a home zone and a moving mobile unit to illustrate one application of the present invention;
Figure 3 is a flow chart illustrating a process in accordance with the present invention.

### DETAILED DESCRIPTION OF THE INVENTION

The present invention can be directed to a system for efficient utilization of network resources in procurement of location information relating to mobile units in a telecommunications network for use with location-based applications. The invention can be applicable to a variety of location-based applications in a variety of network environments involving a variety of different location information sources.

In a number of applications, including location-based billing and tracking applications for monitoring the movements of children, automobiles or other assets, the present invention allows for dynamically varying the location polling timing or frequency at which the location of a mobile unit is monitored. For example, a first polling frequency may be used for monitoring the location of a mobile unit until some sort of trigger event alters the monitoring requirement at which time a second polling frequency may be utilized. It will be appreciated that the associated trigger event may be proximity-based, based on some other location relationship, and/or time based. Alternatively, each time the location of a mobile unit is determined, a subsequent location polling time may be set for obtaining updated location information for the mobile unit. As will be appreciated, the subsequent location polling time may be set to maximize the duration between location determinations while still providing effective mobile unit monitoring. In any event, it will be appreciated that the present invention allows for intelligent use of network resources and enhanced network efficiency.

In the following description, the process of dynamically adjusting the polling frequency of a mobile resource is set forth in the context of particular implementations involving location-based billing applications having one or more service zones in which varying billing rates may apply and fleet tracking systems wherein the movements of mobile resources are monitored. It will be readily appreciated, however, that other types of location sources and/or other basis for adjusting the polling frequency for a mobile resource may advantageously be utilized in accordance with the present invention. Accordingly, the following description should be understood as exemplifying the invention and not by way of limitation.

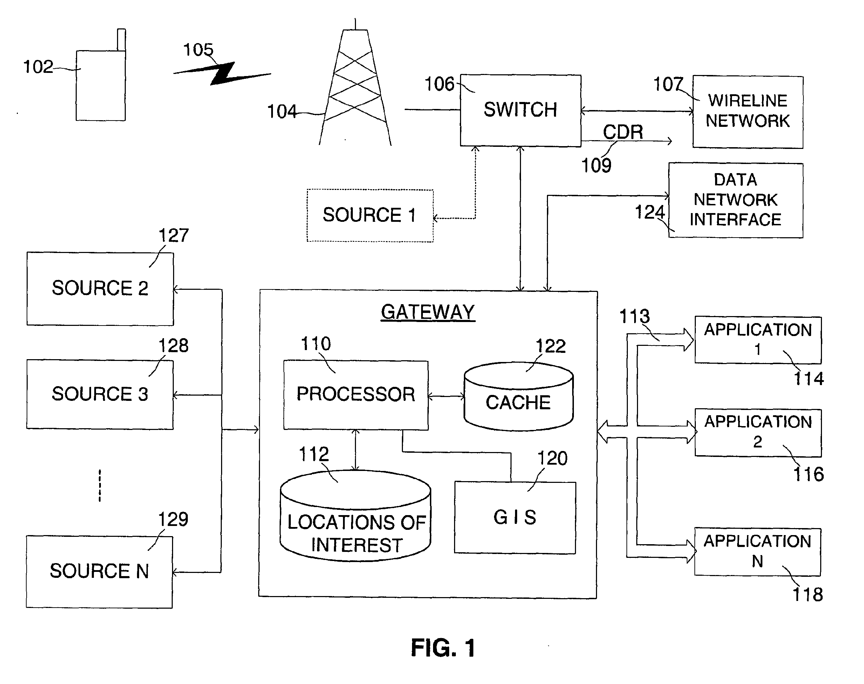

Figure 1 illustrates one example of a wireless network 100.

In the network 100, a mobile unit 102 of interest communicates with cell site equipment 104 via an RF interface 105. In the illustrated example, the mobile unit 102 is shown as being a wireless telephone. It will be appreciated, however, that any suitable mobile unit can be utilized including, for example, personal digital assistants, data terminals having a wireless modem, etc. The cell site equipment 104 may be, for example, a cell sector antenna or the like. In the illustrated network 100, the cell site equipment 104 is interconnected to a switch 106. Although only one piece of cell site equipment 104 is illustrated, it will be appreciated that switch 106 may service multiple cells. The switch 106 may include, for example, a mobile switching center (MSC), Service Control Point (SCP) or any other structure for routing communications between a calling unit and a called unit. Among other things, the switch 106 is operative for routing calls between the wireless network 100 and a wireline network 107 for communications between the mobile unit 102 and another mobile unit, a wireline unit or a data network node. The switch 106 may also be operative for generating billing records such as Call Detail Records (CDRs) 109 for transmission to a billing application of a wireless carrier or other service provider.

Figure 1 also shows a gateway 108, illustrated in connection with the switch 106. It will be appreciated that such a gateway may be associated with one or more (typically numerous) switches. Moreover, different gateways may service different subscribers, carriers, applications, equipment, network areas, etc. The gateway 108 may be, for example, a computer platform for executing a variety wireless network applications. The gateway 108 may be physically located proximate to the switch 106 or may be remotely located and interconnected to the switch 106 by a local area network, wide area network or other communications pathway. The illustrated gateway 108 includes a processor 110 for running a dynamic location polling application in accordance with the present invention. As will be understood from the description below, the dynamic location polling application may alternatively be incorporated into a location-based service application, or a mobile unit 102,or another separate functional unit.

In order to implement dynamic location polling, the application running on processor 110 compares one or more service zones with mobile unit location information. Such service zone information may be stored at the gateway platform, specified by the requesting application or otherwise made available to the processor 110. In the illustrated example, service zone information 112 is stored in the gateway platform. The stored service zone information 112 stores definitions of locations of interest for use by the location-based service applications 114, 116 and 118. The definitions of these locations of interest may be provided in any suitable form. For example, a service zone for a location-based billing application, asset tracking application or the like may be defined as a set of cell identifiers or cell sector identifiers that represent the service zone. Alternatively, the service zone information may be stored as a set of geographical coordinates or geographical boundaries. For cell sector implementations, such geographical information may be converted into current network topology, e.g., cell sector identifiers, at the time of a location comparison. It will be appreciated that other conventions may be utilized for storing a representation of a service zone area.

In addition, it will be appreciated that a GIS system 120 may be utilized for inputting and formatting the service zone information. For example, a service provider or other person defining a service zone may wish to input service zone boundaries relative to an address, streets or other topological information. A GIS application, such as the MAPS application marketed by Openwave Systems of Redwood City, California, may be utilized to receive such inputs and convert the associated service zone definitions into geographical information formatted for convenient handling by the boundary crossing application. Thus, service zone definitions may be converted from one topological system, e.g., addresses or street boundaries, to another topological system, e.g., geographical coordinates or cell/cell sector identifiers. In any case, the definition of the location of interest as well as the location of a mobile unit may be expressed in terms of a quadtree data structure as described in U.S. Patent No. 6,212,392, entitled "Method for Determining if the Location of a Wireless Communication Device is Within a Specified Area," which is incorporated herein by reference.

Location information regarding the locations of mobile units may be received from a unit 102, directly from a LFE source 126-129 or from a source of stored location information. The nature of the location finding technology employed, the nature of the received location information and the route by which the location information is obtained may vary. For example, in the case of cell sector location information, a cell sector identifier may be extracted from communications between the mobile unit 102 and the switch 106. In the case of handset-based location finding equipment such as GPS information, location coordinates may be encoded into communications transmitted from the unit 102 to the cell site equipment 104. In other cases, a location management program running on the gateway 108 or another platform may preprocess raw location information.

In the illustrated example, the gateway 108 is illustrated as including a location of interest database 112 and a location cache 122. Such a database 112 may include service zone definitions or other locations of interest for one or more of the location-based service applications 114, 116 and 118. The location cache 122 may include location information for mobile units at various times indexed, for example, to a mobile unit identifier such as a MIN/ESN. Although the database 112 and cache 120 are thus illustrated as distinct elements, it will be appreciated that the database 112 and cache 120 may utilize shared or non-dedicated memory resources. Moreover, the database 112 and cache 120 each need not be located at the gateway 108 or at the same platform as one another, but rather, may reside at any location where the stored information can be accessed by the dynamic location polling application.

As shown in Figure 1, multiple sources 126 - 129 may be associated with the network 100. As shown, these sources may be connected to the gateway via the switch or independent of the switch. These sources may employ any of a variety of location finding technologies including AOA, TDOA such as GPS and cell/sector technologies. It will be appreciated that the nature of the data obtained from the sources 126 - 129 as well as the path by which the data is transmitted varies depending on the type of source and the ability to accommodate a variety of sources is an important aspect of the present invention. Some types of sources include equipment in the handset. Examples include certain GPS and other TDOA systems. In such cases, location information may be encoded into signals transmitted from the handset to a cell site or other receiver, and the information may then be transferred to the gateway 108 via the switch 106 or otherwise. Other sources, e.g., network-based systems, use equipment associated with individual cell sites such as specialized antennae to make location determinations such as by triangulation and, again, the resulting location information may be transferred to the gateway 108 via the switch 106 or otherwise. Still other sources employ a network of dedicated source equipment that is overlaid relative to the wireless network 100. Such systems may communicate location information to the gateway 108 independent of the switch 106 and network cell site equipment. In addition, some source technologies can be implemented via equipment resident in the handset, in cell sites or other network locations and/or in dedicated sites such that the data pathway of the location information may vary even for a given source technology.

Although a number of the illustrated sources 126 - 129 are shown as operating separate from the switch 100, in reality, certain ones of the sources, such as a cell ID source, would likely provide information via the switch 106. The sources may further include network-based AOA systems and network-based TDOA systems and external systems such as GPS. Generally, the illustrated network based systems such as AOA and network TDOA systems determine the location of a wireless station 102 based on communications between the wireless station and the cell site equipment of multiple cell sites. For example, such systems may receive information concerning a directional bearing of the wireless station 102 or a distance of the wireless station 102 relative to each of multiple cell sites. Based on such information, the location of the wireless station 102 can be determined by triangulation or similar geometric/mathematic techniques. External systems such as GPS systems, determine the wireless station location relative to an external system. In the case of GPS systems, the wireless station 102 is typically provided with a GPS receiver for determining geographic position relative to the GPS satellite constellation or forwarding satellite based information to a network element that computes location. Thus, various types of location information may be transmitted across an air interface to the network 100. Additionally, in the case of network assisted GPS or A-GPS, certain GPS information may be combined with network information to compute the location of a mobile unit.

The gateway 108 can support multiple location-based services applications, as generally indicated by applications 114, 116 and 118. The present invention supports a number of applications where service information (e.g., routing information, call rating information, local service information, etc.) is provided in response to comparing mobile unit location to stored location information, e.g., a home zone or other service zone or a boundary. A number of examples of such applications are described below. It will be appreciated that many more examples are possible. Nonetheless, the following examples illustrate that such applications can vary, for example, with respect to monitoring requirements for a given mobile unit.

One type of application where dynamic location polling may be utilized relates to fleet management such as rental vehicle tracking where it may be desired to monitor movements of a rental vehicle to identify boundary crossings. In this case, rental vehicles may be tracked to insure that the tracked rental vehicle is being used in accordance with the rental contract, e.g., that the vehicle is not being taken across certain national borders, which may be proscribed due to insurance limitations, political/social considerations or other reasons. The rental company may therefore desire to receive notification when boundary crossings occur. It will be appreciated that the rental company would not necessarily require continual updates of vehicle locations (though some companies may choose to obtain such updates).

As will be discussed in more detail below, such a boundary-crossing event can be identified using a conventional wireless telephone or other mobile unit carried by the rental vehicle and, preferably, configured to remain powered on when the vehicle is in use. Such a monitoring application can take advantage of existing wireless network gateways and location finding equipment to provide monitoring with minimal, if any, equipment on board the rental vehicle dedicated to position monitoring, thereby reducing costs and facilitating rapid deployment. As described below, a wireless network gateway remotely or locally associated with a network switch can be connected to one or more location finding equipment systems for receiving location information regarding the monitored vehicle or its on-board mobile unit and can be further connected to a data network for providing reports to the rental company's data terminal.

The dynamic location polling application may initially (e.g., upon activating monitoring for an identified mobile unit) utilize a default polling frequency to periodically determine the location of the mobile unit (i.e., rental vehicle). Upon receiving updated location information for the mobile unit 102, the dynamic location polling application may compare the mobile unit location to one or more boundaries to determine if the polling frequency should be altered (i.e., increased or decreased). For example, if a mobile unit moves beyond a predetermined distance from the nearest boundary of interest, the default polling frequency may be decreased (i.e. the duration between location determinations may be increased). That is, if it is unlikely the mobile unit 102 would or could traverse the distance between its current location and the boundary of interest in less than the default period between location polls, determining the location of the mobile unit 102 at this polling frequency would needlessly consume network resources. Accordingly, the location polling frequency may be decreased to better utilize those resources.

Another type of application where it may be desired to dynamically alter the location polling frequency of a mobile unit is call management applications including call routing applications like location-based billing applications. For example, in location-based billing applications, the rate applied for calls placed or received using a wireless telephone depends on the location of the phone. In this regard, wireless carriers may wish to encourage subscribers to more fully use their wireless phones by providing call rating competitive with land line phones for calls placed in or near the subscriber's home, office or other defined location, but providing a different rating for calls placed or received outside such "home zones." Thus, boundary crossings may be monitored to toggle between "home zone" and "outside home zone" billing rates.

The frequency at which the location of the mobile unit 102 is determined may be dynamically altered in relation to any of a plurality of factors. As in the above example, the location of the unit 102 relative to a service zone may call for a reduced or increased polling frequency. For example, as a user approaches a boundary, the polling frequency may be increased to provide enhanced zone determination accuracy. In addition, other factors such as time of day, use history, direction and/or velocity of travel may be utilized to set one or more location polling frequencies for a mobile unit 102. For example, an application may request that most units may have a reduced polling frequency during late night hours, or, other hours of low expected use. However, a unit with a late night use history (e.g. a wireless unit of a night shift worker) may utilize a different polling frequency. In any case, the dynamic location polling application utilizes a location of a wireless unit, at least one location of interest, and in some instances an additional factor associated with the unit, or, specified by a location-based application 114-116 to determine an appropriate polling timing or frequency. In this regard, the location polling frequency application may utilize an algorithm (which may be specifically tailored for each location-based application 114-118) to determine a probability of when a status of the unit would be expected to change relative to a location of interest. Accordingly, the next location determination for the mobile unit may be set for a time just prior to the time of the expected status change, or, set to a default periodic polling frequency based on the location of the mobile unit. Variables that may be utilized to determine a subsequent location polling time include, without limitation, distance between the mobile unit 102 and the location of interest, velocity and/or direction of travel of the mobile unit 102, usage history of the mobile unit 102, and/or time of day.

In addition, one or more variables may be specified by a location-based application 114-118 for use in determining a subsequent location polling time or frequency. These location based application variables may be termed Quality of Tracking (QoT) variables. These variables may include, without limitation, minimum and/or maximum polling frequencies, a maximum allowable duration for identifying a mobile unit change of a status (i.e. a maximum allowable time for determining a mobile unit has crossed a zone boundary), allowable costs for location information, and/or specifying an allowable source(s) for obtaining location information. Whatever variables are utilized, the polling timing or frequency is preferably set to minimize the use of network resources (e.g., location sources 126-129) while providing adequate zone determinations/boundary monitoring, etc. for the location-based applications 114-118.

As the foregoing examples illustrate, the location polling requirements can vary from application to application or even within a particular application in accordance with the present invention. The illustrated applications 114, 116 and 118 may be any of various types of location-based service applications and substantially any number of applications may be supported by the gateway 108 in accordance with the present invention.

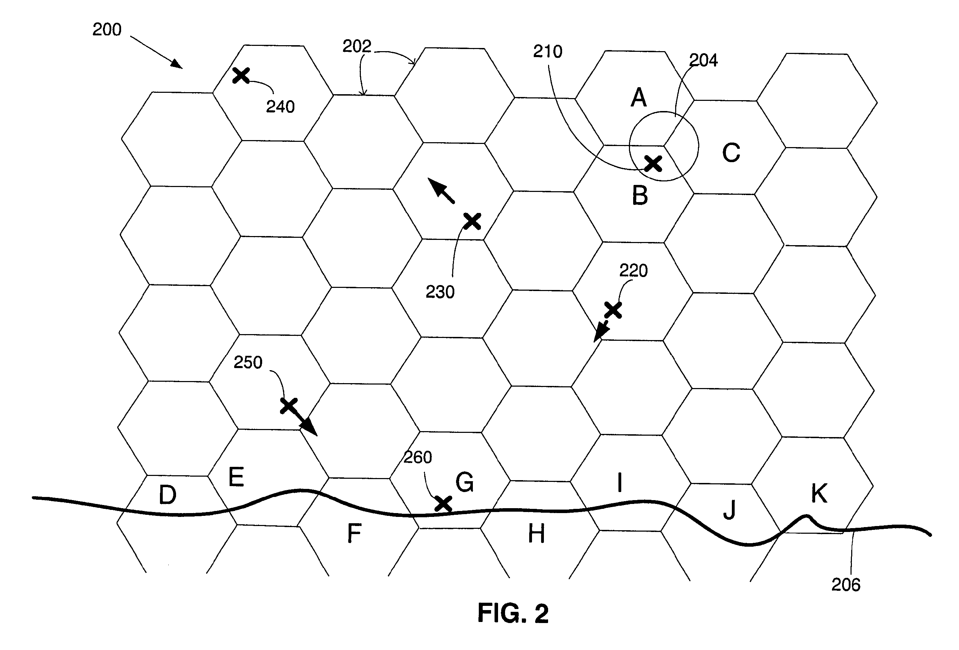

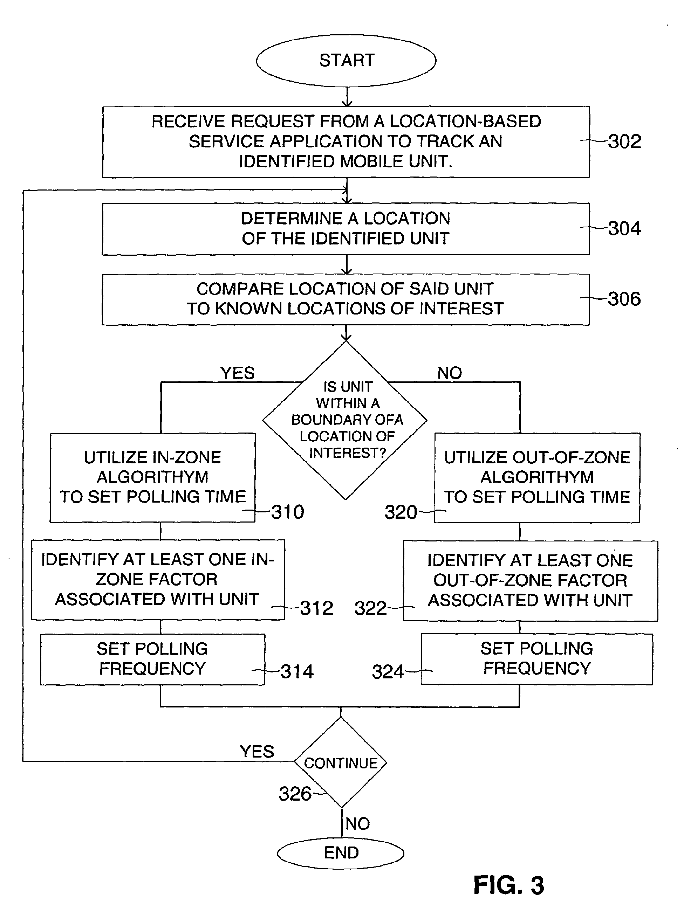

Figs. 2 and 3 show examples illustrating the context where the service application is a fleet tracking application that may be utilized by a fleet rental service such as a rental car operation. Referring first to Fig. 2, a portion of a wireless network is generally indicated by the reference numeral 200. As shown, the network 200 is divided into a number of cells 202. For purposes of illustration, the cells are illustrated as being regular in terms of size and shape. In reality, the various cells of a wireless network may vary in size and shape due to terrain and other factors. Moreover, the coverage areas of the cells may overlap to a significant extent such that a mobile unit located at a particular location may communicate via any one of two or more adjacent cell site antennas. Finally, although Fig. 2 illustrates undivided cell areas, a given cell may be divided into sectors, e.g., three approximately 120 ° areas relative to a center point of a cell. In this regard, cell sector information may be available to better determine the approximate location of a mobile unit. Thus, although Fig. 2 illustrates a simplified topology of a wireless network, it should be appreciated that various types of network typology information may be utilized to locate a mobile unit in accordance with the present example.

In the illustrated network 200, the fleet renting service's home zone 204 is defined as a circular area surrounding a home zone location, e.g., geographical coordinates defining the fleet rental operations location of business. The home zone 204 overlaps three adjacent cells designated cells C, D and E. Line 206, which extends through portions of cells D-K, represents a restricted boundary. The location of a mobile unit 102 is depicted relative to the network 200 at varying times to better illustrate utilization of dynamically setting the polling frequency for a tracking application, as will be discussed herein.

In particular, for purposes of this illustration, the location of the mobile unit 102 as represented by the "X" on the illustrated network 200 of Figure 2 is determined six times relative to a restricted boundary 206. Initially, at time 210 the mobile unit is located within a home zone 204 (e.g., at a car rental lot); at time 220, the mobile unit is between the home zone 204 and the restricted boundary 206 and is moving towards the restricted boundary 206; at time 230, the mobile unit 102 is moving away from the restricted boundary 206; at times 240 and 250, the location is determined to be stationary relative to the restricted boundary 206; and at times 260 and 270 the mobile unit is approaching and proximally located to the restricted boundary 206, respectively.

Figure 3 provides a flowchart diagram of steps taken to dynamically set the polling frequency for determining the location of the mobile unit 102. The process is initiated by receiving (302) a request to track an identified mobile resource from a location-based application. As noted, this request may include one or more quality of tracking parameters for use in dynamically setting a location polling frequency appropriate for the requesting location-based application. In the illustrated case, such request is received at a gateway platform 108 (see Figure 1).

Initially, the gateway 108 determines (304) the location of the mobile unit 102 utilizing a location information source which may comprise, as described above, location finding equipment sources 127-129, network sources 126 and/or stored information from a location information cache 122. The location information for the mobile unit 102 is compared (306) to locations of interest (e.g. a geographical description of boundary 206 and/or home zone 204) stored within the location interest database 112 at the gateway platform 108. The mobile unit's location is determined (308) relative to the locations of interest. For example, as shown in Figure 2, at time 210 mobile unit 102 is within the home zone 204 of the rental operation. In this case, an "in-zone" algorithm may be utilized (310) to set an appropriate polling frequency for the identified mobile unit 102. As will be appreciated, different applications may utilize different algorithms for dynamically setting polling frequencies. For example, package delivery companies may desire more frequent updates on the location of its fleet resources than rental car operations. In any case, an in-zone algorithm may be utilized (310) that may, for example, set a standard default polling frequency (e.g. every fifteen minutes) to determine whether the mobile unit 102 remains within the service zone 204. Alternatively, the in-zone algorithm may identify (312) one or more factors from the obtained location information and/or QoT parameters specified in the request, such as the operating hours for the rental car operation, for use in setting a in-zone polling frequency. For example, a determination as to whether the operation is open or closed may be made. If the operation is open, the polling frequency may be set (314) to a default frequency (e.g. fifteen minutes). Alternatively, if the rental car operation is closed and it is not expected that the rental cars will move, a lower polling frequency, such as an hour, may be set (314). Alternately, a higher frequency (e.g., every five minutes) may be set (314) during off-business hours to prevent, for example, theft. At the next location polling time, a determination (326) is made as to whether continued monitoring is desired. This may entail determining whether a request has been received to terminate such tracking.

If tracking is not terminated, a new location is determined (304) for the mobile unit 102 and the updated location is again compared (306) to the locations of interest. As shown in Figure 2, at the second polling time, the mobile unit is located outside the service zone 204. Accordingly, an out-of-zone algorithm is utilized (320) to set a polling frequency for the mobile unit 102. Again, this algorithm may be application dependent. One or more factors related to the location information for the mobile unit 102 as well as any quality of tracking parameters set forth by the location-based application are identified (322). For example, at time 220, it may be determined that the mobile unit 102 is located ten miles away from the restricted boundary 206 and headed on a course generally towards the restricted boundary 206 at a velocity of 30 mph. Accordingly, if none of these factors changed, the mobile unit 102 could be expected to reach the boundary within a twenty minute time period. Therefore, a polling time of less than twenty minutes may be set (324) to update the location of the mobile unit 102. Alternatively, a near boundary polling frequency of every five minutes may be utilized while the mobile unit is within ten miles of the restricted boundary 206.

At the next location polling time, an updated location of the mobile unit may be determined (304). For example, at time 230, the mobile unit may be located 15 miles from the restricted boundary 206 and moving in a direction away from the boundary at 65 mph. Accordingly, the frequency between location polling may be extended to, for example, 25-minute intervals. At time 240, the mobile unit may be 50 miles from the restricted boundary 206 and be stationary. Accordingly, the polling frequency may be set to no more than once per hour, or, perhaps to a maximum frequency specified by the location based application (e.g., forty-five minutes). In addition, if the mobile unit 102 remains stationary between successive location determinations, e.g. the location determinations occur during late night hours when the mobile unit may be inactive (i.e. the user is sleeping), the polling frequency may be further increased (324). Alternatively, if there is no change in the mobile unit's status (e.g., location) between successive location determinations, the polling frequency may default to the previously set (324) frequency. Additionally, when the mobile unit 102 is located a predetermined distance away from a location of interest, the algorithm may further dictate the type of location information source utilized to provide updated location information. For example, when located more than five miles from a location of interest, a low accuracy location information source, such as a cell sector identifier, may be utilized for monitoring purposes. In this regard, in addition to minimizing the amount of times the location of a mobile unit 102 is determined, the network cost of these determinations may also be minimized.

By way of further example, at time 250, the mobile unit is located 15 miles from the restricted boundary 206 and approaching the boundary 206 at 60 mph. Accordingly, a polling frequency of every three minutes may be set. Finally, at time 260 the mobile unit is within one mile of the restricted boundary 206 wherein the polling frequency may be increased to every minute to allow for near immediate notification if the mobile unit 102 crosses the restricted boundary 206. Accordingly, when located adjacent to a monitored boundary a location information source with a low level of uncertainty may be utilized to monitor the location of the mobile unit.

In the example provided above, the factors utilized to set the polling frequency include location relative to a boundary, rate of travel, direction of travel, and time of day. However, it will be appreciated that other factors may be utilized for other applications. In any case, it is preferable for a given application to create an algorithm wherein the number of location polls for any given mobile unit is minimized while still providing adequate mobile unit tracking information for the location-based service application in order to efficiently utilize network resources.

While various embodiments of the present invention have been described in detail, it is apparent that further modifications and adaptations of the invention will occur to those skilled in the art. However, it is to be expressly understood that such modifications and adaptations are within the spirit and scope of the present invention.

## Claims

1. A method for use in providing location information for mobile units in a wireless network, comprising the steps of:
obtaining first location information for said mobile unit at a first time;
utilizing said first location information for determining a status of said mobile unit relative to a location of interest; and
based on said first location information and at least a first monitoring specification, determining a timing for obtaining second location information for said first mobile unit at a second time.

2. The method of Claim 1, wherein said at least a first monitoring specification is utilized for at least one of:
setting an allowable time for identifying a change of said status of said mobile unit relative to said location of interest;
setting an allowable cost associated with said second location information; and
setting a priority for monitoring said first mobile unit;

3. The method of Claim 2, wherein setting a priority for monitoring said first mobile unit further comprises at least one of:
setting a maximum allowable duration between obtaining said first location information and obtaining said second location information; and
setting a minimum allowable duration between obtaining said first location information and obtaining and said second location information.

4. The method of Claim 1, 2 or 3, further comprises:
obtaining geographical information defining a boundary associated with said location of interest.

5. The method of Claim 4, wherein said step of determining said status comprises determining a location of said mobile unit relative to said boundary.

6. The method of any preceding claim, wherein said step of determining a timing comprises calculating an expected travel time between a first location associated with said first location information for said mobile unit and a boundary associated with said location of interest.

7. The method of Claim 6, wherein said expected travel time is calculated utilizing at least one of:
a distance between said first location associated said mobile unit and said boundary;
an uncertainty factor associated with said first location;
a velocity of travel associated with said mobile unit;
a direction of travel associated with said mobile unit;
expected usage periods associated with said mobile unit;
a use history associated with said mobile unit; and
geographical information.

8. The method of Claim 6 or 7, wherein said timing is set for a duration of less than said expected travel time.

9. The method of any preceding claim, further comprising:
receiving a monitoring request from a location-based service application to monitor an identified mobile unit.

10. The method of any preceding claim, wherein said determining step is performed by said mobile unit.

11. A method for use in providing location information for mobile units in a wireless network, comprising the steps of:
receiving first location information regarding a mobile unit at a first time;
comparing said first location information to a location of interest associated with said first mobile unit to monitor a status of said mobile unit, and
based on said status, setting a second time for requesting updated location information for said mobile unit; and
at said second time, requesting second location information from a location information source.

12. The method of Claim 11, wherein said step of comparing further comprises:
making a zone determination to determine if said mobile unit is within a zone associated with said location of interest.

13. The method of Claim 12, wherein setting a second timing further comprises:
selecting a default second timing depending on said in-zone determination.

14. The method of Claim 11, 12 or 13 wherein requesting comprises obtaining location information from at least one of:
location finding equipment associated with said wireless network; and a source of stored location information.

15. A method for use in providing location information for mobile units in a wireless network, comprising the steps of:
receiving a monitoring request from a location-based service application to monitor an identified mobile unit;
obtaining first location information for said identified mobile unit;
comparing said first location information with at least one location of interest associated with said identified mobile unit to determine at least a first relative position therebetween;
based on said at least one relative position of said identified mobile unit and said at least one location of interest, setting a timing for obtaining second location information for said identified mobile unit at a second time.

16. The method of Claim 15, further comprising:
providing said first location information to said location-based service application.

17. The method of Claim 15 or 16, wherein said receiving step further comprises at least one of:
receiving at least a first specification regarding a quality of said monitoring; and
receiving information associated with said at least one location of interest.

18. The method of Claim 15, 16 or 17 wherein determining said relative position comprises identifying if said identified mobile unit is within a boundary associated with said at least one location of interest.

19. The method of Claim 18, wherein setting said timing comprises setting a default timing based on said identifying step.

20. The method of any of Claims 15 to 19, wherein said step of determining said relative position comprises determining a distance between said identified mobile unit and a boundary associated with said at least one location of interest.

21. The method of Claim 20, wherein said timing is set to a value proportional to said distance.
